# EUROPEAN PATENT SPECIFICATION

(11) **EP 0 669 854 B1**
(45) Date of publication and mention of the grant of the patent: **11.06.1997**
(21) Application number: 94900156.4
(22) Date of filing: 18.11.1993
(51) Int. Cl.: B01J 37/00, C01B 17/04, B01D 53/50, B01J 23/85, B01J 23/24

(54) **PROCESS FOR REMOVING SULPHUR DIOXIDE FROM A SULPHUR DIOXIDE-CONTAINING GAS STREAM**
VERFAHREN ZUR ENTFERNUNG VON SCHWEFELDIOXYD AUS SCHWEFELDIOXYD ENTHALTENDEN GASSTRÖMEN
PROCEDE D'EXTRACTION DU DIOXYDE DE SOUFRE DANS UN FLUX GAZEUX RENFERMANT UN TEL DIOXYDE

(30) Priority: 18.11.1992 EP 92203539
(43) Date of publication of application: 06.09.1995
(73) Proprietor: Akzo Nobel N.V., 6824 BM Arnhem (NL)
(72) Inventor: DE BOER, Mark, NL-3524 ZE Utrecht (NL); GEUS, John, Wilhelm, NL-3723 GJ Bilthoven (NL)
(74) Representative: Schalkwijk, Pieter Cornelis
(86) International application number: EP9303250
(87) International publication number: WO9411105

(56) References cited:
- EP-A- 0 196 768
- EP-A- 0 497 436
- NL-A- 7 317 081
- US-A- 3 956 105
- US-A- 5 110 783

## Description

The invention relates to a process for removing SO₂ from an SO₂-containing gas stream by catalytically reducing the SO₂ to elemental sulphur.

SO₂-containing gas streams are released, int. al., when burning fossil fuels and in all sorts of industrial processes. Now that the waste gases to be released into the atmosphere are subject to more and more stringent environmental demands, the removal of SO₂ from the gas streams released has become increasingly essential.

Up to now, this has often been done by contacting the SO₂-containing gas stream with an SO₂ absorbent, such as CaO. The reaction between CaO and SO₂ causes calcium sulphate to form, which is dumped or otherwise processed. Alternatively, regeneratable absorbents for SO₂ are employed, e.g., supported CuO or CeO₂. However, during their regeneration further SO₂-containing gas streams are formed, for which some use has to be found. Thus, in the industry the SO₂ in the SO₂-containing gas stream is converted into H₂S, after which the H₂S-containing gas stream is passed to a Claus process, where the H₂S is converted into elemental sulphur. This is a complicated way of removing SO₂ from an SO₂-containing gas stream.
Consequently, there is need for a simple process for removing SO₂ from SO₂-containing gas streams with direct formation of elemental sulphur, a product which has a wide range of applications.

Such a process is proposed by Gangwal (Environmental Progress, Vol. 10, No. 3 (August 1991), 186-191) describing a process for recovering sulphur from SO₂-containing gases in which gases are combined with a reducing gas, e.g., an H₂- and/or CO-containing gas, and contacted with an unidentified catalyst at a temperature of 392-702°C and a pressure of 1-40 bar. Only at a pressure higher than 20 bar and a temperature above 400°C are acceptable conversion percentages obtained. If H₂ is present, at such a temperature a significant amount of the formed elemental sulphur will be reduced further to H₂S. The low selectivity for elemental sulphur of the process described by Gangwal is also apparent from the fact that in order to increase the elemental sulphur yield, the SO₂ reduction is followed by a Claus process in which the formed H₂S is reacted with SO₂ to form elemental sulphur. Speaking from an economical point of view, the reaction conditions of the process according to Gangwal are unattractive.

WO 91/04941 describes a process for removing SO₂ from an SO₂-containing gas stream by catalytically reducing the SO₂ to elemental sulphur. The reaction is carried out in a temperature range of 300-700 °C with a catalyst selected from the group consisting of silica, alumina, zinc ferrite, zinc titanate, and other mixed metal oxides, and mixtures thereof. The mildest temperature used in the Examples of this reference is 392 °C, where, at a pressure of 40 atm and an LHSV of 1830 h⁻¹, a conversion is obtained of 75.9%. The lowest temperature at which a conversion of at least 90% is achieved is 449 °C, with a pressure of 40 atm and an LHSV of 1830 h⁻¹ being applied. The necessity of using these severe operating conditions makes the process of this reference unattractive.

DE Offenlegungsschrift 25 31 930 describes a multiple-step process for recovering elemental sulphur from a gas stream containing sulphur compounds. In one of the steps, an SO₂-containing gas stream is contacted with a catalyst containing Group VI and/or Group VIII metals on a carrier at a temperature of 200-450 °C to convert the SO₂ at least partly into H₂S, which, optionally together with additional SO₂, can then be fed to a Claus process. The fact that H₂S is formed thus makes a further process step necessary. In addition, H₂S is a very undesirable compound from an environmental point of view.

Therefore, there is need for a process in which SO₂ is catalytically converted with high conversion into elemental sulphur without substantial formation of H₂S under mild circumstances. Such a process is provided by the present invention.
Accordingly, the present invention is directed to a process for removing SO₂ from an SO₂-containing gas stream by catalytically reducing the SO₂ to elemental sulphur without substantial formation of H₂S, wherein a gas stream comprising SO₂ and a reductor, which reductor consist for 85-100 mol.% of H₂ and for 15-0 mol.% of CO, wherein the molar ratio of the reductor to the SO₂ is between 0.1 and 4 to 1, is contacted at a temperature in the range of 180 to 260°C and a pressure of between 1 and 60 bar, with a sulphur resistant catalyst comprising a Group VIB metal component and/or a Group VIII metal component on a carrier.

Elemental sulphur takes many forms. The term elemental sulphur as used in this description above and below refers to all types of sulphur which, by and large, contain only sulphur as ingredient, irrespective of the specific form. Typical examples include S, S₂, and S₈. A detailed survey of the various types of elemental sulphur is given, int. al., in Meyer (Chemical Reviews Vol. 76, No. 3 (1976), 367-388).

The SO₂-containing initial gas streams to be employed in the process according to the invention may be SO₂-containing gas streams obtained in the chemical or the thermal regeneration of SO₂ absorbents. Also, use may be made of SO₂-containing gas streams formed in the burning of fossil fuels, and of Claus reactor tailgases, which in addition to SO₂ often contain H₂S and elemental sulphur. It will be self-evident to the person skilled in the art which other SO₂-containing gas streams may be treated by the process according to the invention.

Since under the conditions mostly prevalent in the reactor oxygen reacts with hydrogen to form water, the SO₂-containing gas stream preferably contains as little oxygen as possible. The hydrogen intended to reduce the SO₂ is used up in the reaction with oxygen, which leads to a lower hydrogen yield of the process. The gases which are released during the burning of fossil fuels often contain oxygen in addition to SO₂. Consequently, it is preferred to pass such gases over a regeneratable SO₂ absorbent, and to use the gas stream formed in the regeneration of the absorbent, which contains little if any oxygen, in the process according to the invention. Such a procedure also allows the SO₂-containing gas stream to be concentrated.

Depending on the origins of the SO₂-containing gas stream, it may contain SO₃. Since SO₃ can react with water to form H₂SO₄, which is highly corrosive, it is preferred that the SO₂-containing gas stream contain no, or only a minute amount of SO₃.

The reductor, which consists for 85-100 mole% of H₂ and for 15-0 mole% of Co, serves to reduce the SO₂. If H₂ is used as reductor, reaction (a) takes place:

SO₂ + 2 H₂ → S + 2 H₂O (a)

In this way an effective reduction to elemental sulphur is obtained. When the temperature is too high, or the molar ratio between the reductor and the SO₂ is too high, there is increased risk of further reduction to H₂S according to (b):

S + H₂ → H₂S (b)

If CO is present in the reductor, reaction (c) takes place, also resulting in the production of elemental sulphur:

SO₂ + 2 CO → S + 2 CO₂ (c)

However, when CO is present, under certain conditions it may react with the formed elemental sulphur according to (d) to form COS, which, in its turn, under certain conditions may react with water according to (e) to form H₂S. It is known from the literature that reaction (e) is catalysed by basic hydroxyl groups, e.g., those present on alumina or titania.

S + CO → COS (d)

COS + H₂O→ H₂S + CO₂ (e)

When both H₂ and CO are present in the reductor, and the gas stream also contains water, as is the case in coal gas mixtures, combinations of reactions (a)-(e) may take place, depending on the reaction conditions. In that case it is of importance to note that reactions (d) and (e) take place at a lower temperature than reaction (b).
This means that, since it is desired to produce as much elemental sulphur as possible and to avoid through-reaction of the elemental sulphur formed, the process should be carried out at a lower temperature when CO is present in the reductor than when use is made of H₂ only. However, operating at a lower temperature means reduced conversion of SO₂ into elemental sulphur.

Since it is desired to obtain as much elemental sulphur as possible with high SO₂ conversion, and substantially no H₂S formation, the use of as much H₂ as possible in the reductor is preferred. Preferably, at least 98 mole%, will then be made up of H₂.

While the addition of extra reductor is not necessary if the SO₂-containing gas stream contains a sufficient quantity of reductor in itself, in actual practice, however, it tends to be necessary to add at least part of the total amount of reductor needed. In such a situation it is preferred to add only hydrogen as reductor.

Of course, it will be obvious to a person skilled in the art that, in the presence of CO₂ and water, the CO and H₂ concentrations of the SO₂-containing gas stream led to the reduction reactor are interrelated through the CO shift reaction, so that if one compound is present as reductor, the other will be formed in situ, at least in small amounts, all the more since the CO shift reaction is catalysed by the catalyst present in the reduction reactor.

The molar ratio of the amount of reductor present in the gas stream to the amount of SO₂ should be in the range of 0,1 to 4. If there is too much reductor, the through-reduction of the formed elemental sulphur is favoured over the selective reduction to elemental sulphur; in the case of a less than stoichiometric amount of reductor, the reduction process ceases after the available amount of reductor has been used up and SO₂ will be left in the gas stream. The reductor:SO₂ molar ratio is in the range of 0,1 to 4, preferably in the range of 1,5 to 2,5.

The amount of SO₂ present in the SO₂-containing gas stream may be very small from a technical point of view. The SO₂ content of the SO₂-containing gas stream will generally be in the range of 50 ppm to 50%, more particularly in the range of 1 to 25%.

The process according to the invention is carried out at a temperature in the range of 180° to 260°C. Below 180°C, the formed sulphur will condense in the catalyst bed. Above 300°C, there is increased risk of further reaction of the elemental sulphur to form H₂S. The temperature preferably is in the range of 200° to 260°C. It will be obvious to the skilled person that higher temperatures will give a higher SO₂ conversion than lower ones, while the selectivity for elemental sulphur will be higher at lower temperatures than at higher ones. Furthermore, optimum temperatures in specific cases will depend on other factors, such as the nature of the reductor, the pressure, the nature of the catalyst, the molar ratio of the amount of SO₂ to the reductor, etc. Considering the above factors, the artisan will know which temperature to select to attain optimum results in his particular case.

The pressure used in the process according to the invention is not critical. Generally, a pressure in the range of 1 to 60 bar is employed. Operating at subatmospheric pressure is not advisable from a technical standpoint; operating at a pressure in excess of 60 bar is expensive and does not carry any technical advantages. In general, it is preferred to carry out the reaction at slightly elevated pressure, e.g., at a pressure above 3 bar. Higher pressures, say, in the range of 15 to 25 bar, may be attractive if the operation is performed at high LHSV.

The LHSV used is not critical to the process according to the invention. Generally, the LHSV will be in the range of 100 to 15 000 h⁻¹. The lower the LHSV, the higher the attained conversion will be. The optimum LHSV in a given case will depend on, int. al., the concentration of the reaction components, the pressure in the reactor, and the catalyst's activity. The skilled person can easily determine the optimum LHSV.

The catalyst used in the process according to the invention is a sulphur resistant catalyst comprising a Group VIB metal component and/or a Group VIII metal component on a carrier. As Group VIB metals may be mentioned molybdenum and tungsten, Group VIII metals include the non-noble metals nickel and cobalt as well as the noble metals platinum and palladium. Preferably, use is made of at least one Group VIB metal and/or at least one non-noble Group VIII metal. Especially preferred in this connection is a combination of nickel and/or cobalt and molybdenum and/or tungsten. The catalyst usually has a metal content in the range of 0,1 to 50 wt.%, calculated on the overall weight of the catalyst. If the catalyst contains a Group VIB metal and a non-noble Group VIII metal, the Group VIB and Group VIII metals will frequently be present in amounts of 5-25 wt.% and 1-7 wt.%, respectively, calculated as trioxide and monoxide, respectively, the two amounts being calculated on the overall weight of the catalyst. If the catalyst contains a Group VIII noble metal, the amount thereof will commonly be less than 5 wt.%, calculated as metal on the overall weight of the catalyst. If so desired, the catalyst may also contain other components, such as phosphorus, halogens, and borium, but this is not essential to the process according to the invention.

The catalyst carrier may be composed of the conventional oxides, e.g., alumina, silica, silica-alumina, alumina with silica-alumina dispersed therein, silica-coated alumina, magnesia, zirconia, boria, and titania, as well as mixtures of these oxides. As a rule, preference is given to the carrier being of alumina, silica-alumina, alumina with silica-alumina dispersed therein, or silica-coated alumina. Special preference is given to alumina and alumina containing up to 10 wt.% of silica, with gamma-alumina being most particularly preferred.

The catalyst's pore volume (measured via mercury penetration) is not critical to the process according to the invention and will generally be in the range of 0,5 to 1 ml/g. The specific surface area is not critical to the process according to the invention either and will generally be in the range of 50 to 400 m²/g (measured using the BET method). The catalyst particles may have the shapes and dimensions common to the art. Thus, the particles may be spherical, cylindrical, or polylobal and their diameter may range from 1 to 10 mm.

The catalysts employed in the process according to the invention are well-known in the art, especially in the field of so-called hydrotreating/hydroprocessing catalysts, and are described in, int. al., US 4 738 767, US 4 062, 809, US 4 500 424, GB 1 504 586, US 4 212 729, US 4 326 995, US 4 051 021, US 4 066 574, EP-A 0 469 675.

The catalysts suitable for use in the process according to the invention may be obtained, e.g., as follows. A carrier precursor is prepared, e.g., in the case of alumina, in the form of an alumina hydrogel (boehmite). It is dried, e.g., by means of spray-drying, whereupon the spray-dried particles are extruded and the extrudates calcined at a temperature in the range of 500° to 850°C, resulting, in the case of alumina, in a carrier of γ-alumina being obtained. The carrier is then impregnated in one or more steps with a solution containing precursors of the metal component(s). In the case of Group VIB metals and the non-noble metals of Group VIII, the precursors may be ammonium molybdate, ammonium tungstenate, cobalt nitrate and/or nickel nitrate. To apply the noble metals of Group VIII the carrier may be impregnated with a solution containing H₂PtCl₆ or an ammonium salt of the noble metal to be applied. After an optional drying step the material is calcined. The skilled person is fully cognisant of how this scheme may be varied.

After calcination, the Group VIB metals and/or the non-noble metals of Group VIII are present in the form of their oxides. In order to be able to reduce SO₂ to elemental sulphur, these oxides must be converted into sulphides. To this end the catalyst is contacted with inorganic or organic sulphur compounds, e.g., as described in EP 0 460 300 A1. The catalyst may be presulphided outside the reduction reactor and activated inside it, or be sulphided in the reduction reactor itself, e.g., by passing a gas stream containing H₂ and H₂S through the reactor. All of this will be known to the skilled person as catalyst sulphiding or presulphiding.

When noble metals are employed, the oxides formed after calcining must be reduced to form metals in the metallic form. In general, catalysts containing noble metals as active components are not presulphided. The preparation of catalysts containing noble metals as active components is known to the skilled person.

The process according to the invention may be carried out as follows. Hydrogen is added to an SO₂-containing gas stream in such an amount as to give a molar ratio of the overall amount of reductor to SO₂ in the SO₂-containing gas stream of between 0,1 and 4. As has been stated hereinbefore, the reductor present in the SO₂-containing gas stream preferably consists largely or entirely of hydrogen. The gas stream comprising SO₂ and reductor in the indicated ratio is fed to a reactor containing the catalyst. In the reactor, the reductor reacts with SO₂ to form elemental sulphur and water. The elemental sulphur is removed from the gas stream leaving the reactor, for example, in a sulphur condensor kept at a temperature below the condensation point of sulphur, 180°C. Alternatively, the elemental sulphur may be removed from the gas stream by, e.g., capillary condensation and absorption in, say, active carbon or alumina. The technology of removing elemental sulphur from gas streams is well-known to the person skilled in the art.

After as much elemental sulphur as possible has been removed from the gas stream, the water present in the gas stream may be removed, for example, in a water condensor. Depending on its constituents, the remaining gas stream is processed further. If the resulting gas stream does not contain any H₂S, SO₂, or elemental sulphur - the ideal situation - it can be evacuated into the atmosphere. Minute amounts of residual SO₂ may be evacuated into the atmosphere or can be removed from the gas by means of an absorbent, e.g., CaO in the presence of oxygen, or a regeneratable absorbent like CuO or CeO₂ on a carrier. If the remaining gas stream comprises substantial amounts of SO₂, it may be returned to the reduction reactor, where, after the addition of reductor, the SO₂ can be converted into elemental sulphur. If so desired, it is possible to incorporate a concentration step before the SO₂-containing gas stream is returned to the reduction reactor. If the remaining gas stream comprises a relatively large amount of H₂S and, optionally, COS of itself, it may be fed to a Claus process, a SCOT process, or a BSR process, all of which are known to the person skilled in the art.

The process according to the invention may be used for recovering sulphur from gas streams comprising smaller or larger amounts of H₂S, for example, gas streams resulting from coal gasification, hydrodesulphurisation of hydrocarbon feeds, or reforming residual feeds. The procedure in these cases is to pass such gas streams over an absorbent for H₂S, e.g., iron oxide, optionally on a carrier. Once the absorbent has absorbed a certain amount of H₂S, it is regenerated by being contacted with an oxygen-containing gas, which removes the H₂S from the absorbent in the form of SO₂. By means of this concentration step a gas stream containing a small amount of H₂S can be converted into a gas stream comprising a reasonable amount of SO₂. The resulting SO₂-containing gas stream can be passed to the reduction reactor, where the process according to the invention takes place.

Incorporating an absorbent for H₂S into the process according to the invention, as described above, also makes it possible to process gas streams comprising SO₂, H₂S, and, optionally, elemental sulphur. A gas stream comprising H₂S, SO₂, and, optionally, elemental sulphur, e.g., the tailgas of a Claus process, is passed to the absorbent described above. Here, the H₂S is absorbed while the SO₂, with the remaining gas stream, is passed to the reduction reactor, where the process according to the invention is carried out. Next, the absorbent is regenerated, and the resulting SO₂-containing gas stream is passed to the reduction reactor. In this way gas streams comprising different inorganic sulphur compounds, e.g., the tailgas of a Claus process, may be desulphurized in a simple manner while recovering elemental sulphur.

An interesting application of the process according to the invention takes the form of an attractive alternative to the regular SuperClaus unit. As described by, int. al., Goar et al. (Sulphur No. 220, May-June 1992, 44-46), in a regular SuperClaus unit the tailgas of the Claus process, which comprises H₂S and, generally, also SO₂, after being mixed with oxygen is contacted with a catalyst which converts H₂S to elemental sulphur. The alternative to the regular SuperClaus comprises a modified SuperClaus unit operated in such a manner that all H₂S is converted into SO₂, e.g., by adding extra oxygen, working at a higher temperature, or using another catalyst. In this way an SO₂-containing gas stream is obtained from which elemental sulphur can be produced using the process according to the invention. Because of the efficiency of the process according to the invention it is possible to obtain a very high yield of elemental sulphur in this way. Depending on the nature of its constituents, the gas stream leaving the reduction reactor incorporated behind a modified SuperClaus unit as described above may be processed further. If the gas stream comprises SO₂, this will generally be present in a concentration sufficiently low for the gas stream to be evacuated into the atmosphere. If the gas stream comprises H₂S, it may be fed to a SCOT unit or a BSR unit.
In comparison, the gas stream leaving a regular SuperClaus unit will sometimes contain SO₂ in a concentration too high to be evacuated into the atmosphere. In such cases the SO₂-containing gas stream may be passed to a reduction reactor for converting the SO₂ to H₂S, after which the resulting H₂S-containing gas stream will be led to a SCOT or a BSR unit. The advantage of the combination of a reduction reactor operated according to the process of the invention with a modified SuperClaus unit over a regular SuperClaus unit consists in that the H₂S-containing gas stream that may result from the reduction reactor operated according to the invention can be passed directly to a SCOT or a BSR unit, without any extra reduction step being necessary.

Alternatively, the process according to the invention may be employed to carry out a selective reduction downstream of a regular Claus unit, before the gas leaving the Claus unit is passed to the sulphur condensor. The gas leaving a Claus unit will comprise H₂S and SO₂ in a molar ratio of 2:1. When this gas is fed to a reduction reactor in which the process according to the invention is carried out, the SO₂ is converted into elemental sulphur. After condensation of the elemental sulphur in the sulphur condensor, the remaining H₂S-containing gas may be passed directly to a regular SuperClaus unit, where the H₂S is selectively reduced to elemental sulphur. Because the process according to the invention provides an extra production step for elemental sulphur, the overall sulphur recovery of the complete process is enhanced.

The invention is illustrated by the following example.

### Example

### The apparatus:

The apparatus for measuring the sulphur recovery from SO₂ consisted of gas dosing equipment, a quartz reactor, and on-line gas analysis. The pure gases (purity SO₂: 99,6%, other gases: 99,999%) were dosed by highly accurate mass flow controllers to make a mixture of SO₂/H₂/Ar (3,0/10,0/87,0, v/v/v). The overall flow rate amounted to 100 ml/min. The catalyst was mounted in a quartz reactor (internal diameter: 8 mm). Quartz lumps were mounted on top of the catalyst bed. The volume of the catalyst bed (undiluted) was about 0,5 ml, giving an LHSV of 12 000 hr⁻¹. The gas flow through the reactor was downstream. The reactor was placed in an oven the temperature of which was controlled by an electronic controller capable of executing temperature programs. The actual temperature in the catalyst bed was measured by means of a thermocouple in the bed.
The effluent gas stream was analysed using flowthrough quartz cuvettes (UV-detection) and a thermal conductivity detector (TCD). Both detectors (UV and TCD) measured the difference signal ahead of and behind the reactor. The SO₂- and H₂S-concentrations were measured by means of the UV-absorption at two different wavelengths; the H₂-concentration could be determined by the TCD.
In a typical sulphur recovery experiment the temperature of the reactor was increased in a linear temperature programme (2 °C/min), with the LHSV remaining constant. The concentration of the gases (i.e., the conversion of H₂ and SO₂, and the formation of H₂S) was measured at 30-second intervals. The elemental sulphur formed in the reaction was condensed behind the reactor.

### The catalyst:

The catalyst used in this experiment was a commercially available CoMo/Al₂O₃ hydrotreating grade: KF-124 (ex Akzo Chemicals). Prior to the reaction the extrudates were crushed and sieved (fraction 0.400-0.625 mm). The catalyst was sulphided in situ in a gas stream of H₂S, H₂, and Ar (10 vol.% H₂S, 40 vol.% H₂, bal. Ar). The temperature was raised from ambient to 400°C (rate 5°C/min), and kept at 400°C for 30 minutes. Subsequently, the temperature was lowered (rate 10°C/min) to ambient in the same gas flow.

### The results:

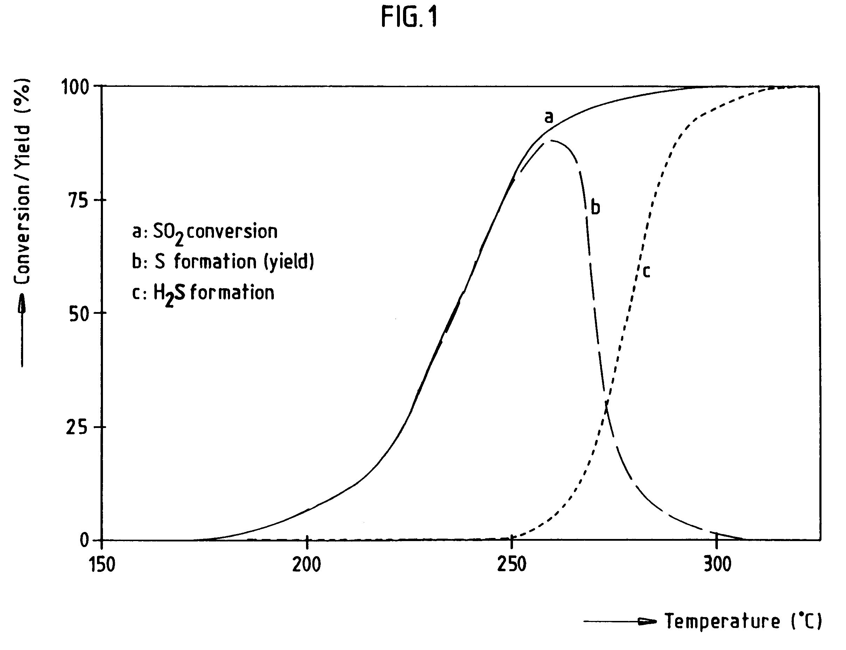

The results of the experiment are given in Figure 1, in which the conversion of SO₂ and the formation of H₂S are plotted as a function of the catalyst temperature. The yield of elemental sulphur is indicated in the figure and is equal to the difference between the amount of SO₂ converted and the amount of H₂S formed. Under the conditions of the experiment, this yield reaches a maximum at about 260°C. At the low temperature side the SO₂ conversion is low, whereas at the high temperature side the selectivity to elemental sulphur decreases because of the formation of H₂S. Under these conditions (LHSV = 12 000 hr, H₂/SO₂ = 3,33, pressure = 1 bar) the yield of sulphur amounts to 90%. The yield can be enchanced by adjustment of the H₂/SO₂ ratio, the LHSV, and the pressure.

## Claims

1. A process for removing SO₂ from an SO₂-containing gas stream by catalytically reducing the SO₂ to elemental sulphur, wherein a gas stream comprising SO₂ and a reductor, which reductor consist for 85-100 mol.% of H₂ and for 15-0 mol.% of CO, wherein the molar ratio of the reductor to the SO₂ is between 0.1 and 4 to 1, is contacted, at a temperature in the range of 180 to 260°C and a pressure of between 1 and 60 bar, with a sulphur resistant catalyst comprising a Group VIB metal component and/or a Group VIII metal component on a carrier.

2. The process according to claim 1 wherein said temperature is in the range of 200 to 260°C.

3. The process according to claim 1 or 2 wherein said molar ratio of the reductor to the SO₂ is between 1.5 and 2.5 to 1.

4. The process according to any one of the preceding claims wherein the Group VIB metal is chosen from molybdenum and tungsten and/or the Group VIII metal is chosen from nickel and cobalt.

5. The process according to any one of the preceding claims wherein the catalyst carrier is alumina, silica-alumina, or alumina with silica-alumina dispersed therein.

6. The process according to claim 5 wherein said catalyst carrier is gamma-alumina.

7. The process according to any one of the preceding claims wherein the SO₂-containing gas stream is obtained by feeding an H₂S-containing gas stream to an absorbent and regenerating the absorbent by contacting the adsorbent with an oxygen-containing gas to release SO₂ from the absorbent.

8. The process according to any one of preceding claims 1-6 wherein the SO₂-containing gas stream is released from a modified SuperClaus unit operated in such a manner that the H₂S fed to the unit is substantially converted into SO₂.

9. The process according to any one of the preceding claims wherein the gas stream leaving the reduction reactor, which comprises elemental sulphur, water, and SO₂, is freed from elemental sulphur, after which the remaining gas stream is freed from water and the remaining SO₂-containing gas stream is recycled to the reduction reactor, optionally after a concentration step.

10. The process according to any one of preceding claims 1-8 wherein the gas stream leaving the reduction reactor, which comprises elemental sulphur and water, is freed from elemental sulphur, after which the remaining gas stream is evacuated into the atmosphere.

## Patentansprüche

1. Verfahren zur Entfernung von SO₂ aus einem SO₂ enthaltenden Gasstrom durch katalytische Reduktion des SO₂ zu elementarem Schwefel ohne wesentliche Bildung von H₂S, wobei ein SO₂ enthaltender Gasstrom und ein Reduktor, welcher Reduktor zu 85-100 Mol% aus H₂ und zu 15-0 Mol% aus CO besteht, wobei das Molarverhältnis des Reduktors zum SO₂ zwischen 0.1 und 4 zu 1 liegt, bei einer Temperatur im Bereich von 180 bis 260°C und einem Druck zwischen 1 und 60 bar mit einem schwefelbeständigen Katalysator in Kontakt gebracht wird, der eine Metallkomponente der Gruppe VIB und/oder eine Komponente eines Metalls der Gruppe VIII auf einem Träger enthält.

2. Verfahren nach Anspruch 1, bei dem die Temperatur im Bereich von 200 bis 260°C liegt.

3. Verfahren nach Anspruch 1 oder 2, bei dem das Molarverhältnis des Reduktors zum SO₂ zwischen 1.5 und 2.5 zu 1 liegt.

4. Verfahren nach einem der vorangehenden Ansprüche, bei dem das Metall der Gruppe VIB gewählt ist aus Molybdän und Wolfram und/oder das Metall der Gruppe VIII gewählt ist aus Nickel und Kobalt.

5. Verfahren nach einem der vorangehenden Ansprüche, bei dem der Katalysatorträger Aluminiumoxid, Siliciumdioxid-Aluminiumoxid oder Aluminiumoxid mit darin verteiltem Siliciumdioxid-Aluminiumoxid ist.

6. Verfahren nach Anspruch 5, bei dem der Katalysatorträger Gamma-Aluminiumoxid ist.

7. Verfahren nach einem der vorangehenden Ansprüche, bei dem der SO₂ enthaltende Gasstrom durch Einspeisen eines H₂S enthaltenden Gasstroms in ein Absorptionsmittel und Regeneration des Absorptionsmittels durch Kontaktieren desselben mit einem Sauerstoff enthaltenden Gas zur Freisetzung von SO₂ aus dem Absorbens erhalten wird.

8. Verfahren nach einem der vorangehenden Ansprüche 1-6, bei dem der SO₂ enthaltende Gasstrom aus einer modifizierten SuperClaus-Anlage freigesetzt wird, die in solcher Weise betrieben wird, dass das in die Einheit eingespeiste H₂S im wesentlichen in SO₂ umgewandelt wird.

9. Verfahren nach einem der vorangehenden Ansprüchen, bei welchem der den Reduktionsreaktor verlassende Gasstrom, der elementaren Schwefel, Wasser und SO₂ enthält, von elementarem Schwefel befreit wird, worauf der verbleibende Gasstrom von Wasser befreit und der zurückbleibende SO₂ enthaltende Gasstrom in den Reduktionsreaktor zurückgeführt wird, gewünschtenfalls nach einer Konzentrationsbehandlung.

10. Verfahren nach einem der vorangehenden Ansprüche 1-8, bei dem der den Reduktionsreaktor verlassende Gasstrom, der elementaren Schwefel und Wasser enthält, verlässt, von elementarem Schwefel befreit wird, worauf der restliche Gas-strom in die Atmosphäre evakuiert wird.

## Revendications

1. Procédé pour l'élimination de SO₂ d'un courant gazeux contenant du SO₂ par réduction catalytique du SO₂ en soufre élémentaire sans formation notable de H₂S, dans lequel un courant gazeux contenant du SO₂ et un réducteur, lequel réducteur consiste en 85 à 100% en moles de H₂ et en 15 à 0% en moles de CO, dans lequel le rapport molaire du réducteur au SO₂ est compris entre 0,1 et 4 à 1, est mis en contact à une température comprise dans la gamme de 180°C à 260°C et sous une pression comprise entre 1 et 60 bar, avec un catalyseur résistant au soufre comprenant un composant à base de métal du Groupe VIB et/ou un composant à base de métal du Groupe VIII sur un support.

2. Procédé suivant la revendication 1, dans lequel cette température est comprise dans la gamme de 200°C à 260°C.

3. Procédé suivant les revendications 1 ou 2, dans lequel ce rapport molaire du réducteur au SO₂ est compris entre 1,5 et 2,5 à 1.

4. Procédé suivant l'une quelconque des revendications précédentes, dans lequel le métal du Groupe VIB est choisi parmi le molybdène et le tungstène, et/ou le métal du Groupe VIII est choisi parmi le nickel et le cobalt.

5. Procédé suivant l'une quelconque des revendications précédentes, dans lequel le support de catalyseur est une alumine, une silice-alumine ou une alumine dans laquelle est dispersée de la silice-alumine.

6. Procédé suivant la revendication 5, dans lequel le support de catalyseur est une gamma-alumine.

7. Procédé suivant l'une quelconque des revendications précédentes, dans lequel le courant gazeux contenant du SO₂ est obtenu par introduction d'un courant gazeux contenant du H₂S dans un absorbant et régénération de l'absorbant par mise en contact de l'absorbant avec un gaz contenant de l'oxygène pour libérer le SO₂ de l'absorbant.

8. Procédé suivant l'une quelconque des revendications 1 à 6, dans lequel le courant gazeux contenant du SO₂ est libéré en provenance d'une unité SuperClaus modifiée fonctionnant de telle sorte que le H₂S envoyé dans l'unité est pratiquement converti en SO₂.

9. Procédé suivant l'une quelconque des revendications précédentes, dans lequel le courant gazeux quittant le réacteur de réduction, qui comprend du soufre élémentaire, de l'eau et du SO₂, est débarrassé du soufre élémentaire, après quoi le courant gazeux restant est débarrassé de l'eau et le courant gazeux restant contenant du SO₂ est recyclé vers le réacteur de réduction, éventuellement après une étape de concentration.

10. Procédé suivant l'une quelconque des revendications 1 à 8, dans lequel le courant gazeux quittant le réacteur de réduction, qui comprend du soufre élémentaire et de l'eau, est débarrassé du soufre élémentaire, après quoi le courant gazeux restant est déchargé dans l'atmosphère.
